# EUROPÄISCHE PATENTSCHRIFT

(11) **EP 2 684 154 B1**
(45) Veröffentlichungstag und Bekanntmachung des Hinweises auf die Patenterteilung: **16.08.2017**
(21) Anmeldenummer: 12726036.2
(22) Anmeldetag: 15.05.2012
(51) Int. Cl.: G06F 21/00

(54) **VERFAHREN UND STEUEREINHEIT ZUR ERKENNUNG VON MANIPULATIONEN AN EINEM FAHRZEUGNETZWERK**
METHOD AND CONTROL UNIT FOR DETECTING MANIPULATIONS OF A VEHICLE NETWORK
PROCÉDÉ ET UNITÉ DE COMMANDE POUR LA RECONNAISSANCE DE MANIPULATIONS FRAUDULEUSES SUR UN RÉSEAU DE VÉHICULE

(30) Priorität: 24.05.2011 DE 102011076350
(43) Veröffentlichungstag der Anmeldung: 15.01.2014
(73) Patentinhaber: Siemens Aktiengesellschaft, 80333 München (DE)
(72) Erfinder: BEYER, Ralf, 91096 Mörendorf (DE); FALK, Rainer, 85586 Poing (DE)
(86) Internationale Anmeldenummer: PCT/EP2012/059051
(87) Internationale Veröffentlichungsnummer: WO 2012/159940

(56) Entgegenhaltungen:
- US-A1- 2005 076 246
- US-A1- 2006 180 709
- US-A1- 2007 121 596
- US-A1- 2007 174 608

## Beschreibung

Die Erfindung betrifft eine Überwachung der Informationssicherheit bzw. der Integrität zur Aufrechterhaltung der Betriebssicherheit/Safety und zur Aufrechterhaltung der Angriffssicherheit/Security zum Schutz vor Schäden durch Manipulation.

Eine Ethernet-basierte oder IP-basierte Datenübertragung wird zunehmend eingesetzt, um Steuerungs- und Überwachungsaufgaben durchzuführen. So verfügen verschiedene Fahrzeuge, insbesondere Schienenfahrzeuge, über Datennetzwerke zur Durchführung der Fahrzeugsteuerung, sowie für weitere Betreiberfunktionen.

Die genaue, ordnungsgemäße Ausführung von Steuerungs- und Überwachungsaufgaben eines Fahrzeuges bzw. eines Schienenfahrzeuges eines Zugverbandes erfordert es, dass das Steuernetzwerk und die darüber verbundenen Steuerungskomponenten wie Steuerungsrechner, Untersysteme bzw. Feldkomponenten mit Sensoren und Aktoren, ordnungsgemäß funktionieren. Bei Manipulationen am Steuernetzwerk ist dies jedoch nicht gewährleistet, da übertragene Steuer- und Messdaten verändert werden können. Dadurch wird der ordnungsgemäße Betrieb beeinträchtigt. Es können unter Umständen für die Betriebssicherheit des Fahrzeugs erforderliche Funktionen nicht mehr ordnungsgemäß erfüllt werden.

Schutzmaßnahmen für Fahrzeugnetzwerke sind in unterschiedlicher Form bekannt. So können Steuernetzwerke zugangsgeschützt installiert werden. Dies geschieht beispielsweise in speziellen Kabelschächten, sodass sie einem Außenstehenden nicht zugänglich sind und Manipulationen somit verhindert werden können. Dies ist jedoch kostenaufwändig und aufgrund der aufwändigen Installation und Durchführung von Wartungsarbeiten nicht allgemein umsetzbar. Einfache, physikalische Schutzmaßnahmen sind relativ einfach zu umgehen, wenn beispielsweise nur eine Abdeckung abgenommen oder abgeschraubt werden muss.

Steuernetze sind meist logisch geschlossen, d.h. nicht bzw. nicht direkt mit externen Netzen verbunden. Durch eine sogenannte "Firewall" kann zumindest der Datenverkehr beschränkt werden, in dem Sinne, dass Daten ausgewählt werden, die mit externen Netzen ausgetauscht werden dürfen. Somit ist ein netzbasierter Angriff von außen nicht oder nur aufwändig möglich.

Durch die beschriebenen Maßnahmen wird jedoch kein Schutz vor Manipulationen am Fahrzeug aufgebaut, so dass Daten innerhalb eines Fahrzeugnetzwerkes doch manipulierbar sind.

Weiterhin ist bekannt, Daten bei der Übertragung durch eine Prüfsumme wie beispielsweise einen "CRC-Wert / Cyclic Redundancy Check", zyklische Redundanzprüfung zu schützen. Diese Prüfsummen eignen sich lediglich dafür, zufällige Übertragungsfehler zu erkennen. Vor absichtlicher Manipulation wird damit kein Schutz erreicht, da der Angreifer in einfacher Weise den gültigen CRC-Wert für die von ihm manipulierten Daten berechnen kann.

Ebenso sind kryptographische Prüfsummen bekannt, wie beispielsweise ein "Message-Authentication-Code" oder eine "digitale Signatur". Dabei werden übertragene Daten, beispielsweise Steuerdaten für ein Fahrzeug, beim Senden um eine kryptographische Prüfsumme ergänzt. Diese wird beim Empfang geprüft. Nur korrekt überprüfte Daten werden weiterbearbeitet. Es kann beispielsweise die Kommunikation mit "MACsec", "IPsec" oder "SSL/TLS" verschlüsselt werden. Dabei sind die übertragenen Daten durch eine kryptographische Prüfsumme geschützt. Ein solcher kryptographischer Schutz ist nur mit Aufwand nachträglich, als Integration in Automatisierungskomponenten zu realisieren. Eine separate Verschlüsselungs-Vorschaltkomponente ist ebenso aufwändig. Außerdem führt die Berechnung und Prüfung einer kryptographischen Prüfsumme wegen der rechenaufwändigen kryptographischen Operationen zu einer Verzögerung, was insbesondere bei Echtzeit-kritischen Steuerungs- und Regelungssaufgaben unerwünscht ist.

Weiterhin sind sogenannte "Intrusion-Detection-Systeme" bekannt, die den auftretenden Netzwerkverkehr überwachen. Bei "verdächtigem" Netzwerkverkehr wird ein Alarm ausgelöst. Es können dabei bekannte Angriffsmuster, sogenannte Angriffssignaturen, des Netzwerkverkehrs erkannt werden. Dadurch können jedoch nur spezielle, bereits bekannte Angriffe erkannt werden. Durch heuristische Verfahren wie z.B. dem Erkennen einer signifikanten Veränderung von statistischen, den Netzwerkverkehr beschreibenden Größen, wird versucht auch bislang unbekannte Angriffe zu erkennen. Hiermit sind lediglich Angriffe erkennbar, indem eine signifikante Änderung von statistischen Kennwerten wie z.B. der Zugriffsdauer oder der Nutzungshäufigkeit eines Netzwerkdienstes ausgewertet werden. Dabei kann bei zufälligen Schwankungen leicht fehlerhaft ein vermeintlicher Angriff detektiert werden.

Dadurch sind heuristische, auf der Analyse von statistischen Kennwerten basierende Angriffserkennungsverfahren unzuverlässig und werden in der Praxis höchstens ergänzend eingesetzt.

Mit einer automatischen Topologieerkennung im Netzwerk werden beispielsweise mittels "LLDP", "CDP", "SNMP" oder "Broadcast Ping" sämtliche verbundenen Netzwerkgeräte ermittelt. Durch "LLDP", ist auch die Topologie der Netzwerkverkabelung ermittelbar.

Die US 2006/0180709 mit dem Titel "Method and System for IP Train Inauguration" beschreibt eine Zugtaufe, die in einem IP-basierten Zugsteuerungsnetzwerk abläuft. Dabei wird die Zugtopographie, die insbesondere auf ein Leitfahrzeug ausgelegt ist, mittels einer Netzwerkerkennung ermittelt. Davon abhängig werden das "Routing" und die IP-Adressumsetzung/NAT konfiguriert.

US 2007/174608 A1 offenbart ein Kommunikationsnetzwerk mit einer verteilten Architektur. Ein in diesem Netzwerk verwendeter Knoten weist eine Verschlüsselungsfunktionalität und eine Sende- und Empfangsfunktionalität auf, um Datenpakete zu senden und zu empfangen.

Der Erfindung liegt die Aufgabe zugrunde, Veränderungen an einem Fahrzeugnetzwerk festzustellen, insbesondere an dem eines Schienenfahrzeugs und eine Gefährdung der Integrität, also der Betriebssicherheit/Safety und der Angriffssicherheit/Security zu verhindern.

Die Lösung dieser Aufgabe geschieht durch die jeweilige Merkmalskombination von unabhängig formulierten Patentansprüchen.

Der Erfindung liegt die Erkenntnis zugrunde, dass unterschiedliche Manipulationen oder Vandalismus an einem Fahrzeugnetzwerk, wodurch die korrekte Durchführung von Steuerungsfunktionen am Fahrzeug gefährdet wird, erkannt werden können. Falls ein betriebssicherer Status nicht gewährleistet werden kann, wird kein regulärer Betrieb ermöglicht.

Zum regulären Betrieb eines Fahrzeugs ist allgemein die Integrität des Fahrzeugnetzwerkes erforderlich. Eine Veränderung absichtlicher oder unabsichtlicher Art oder durch technische Fehler hervorgerufen, kann jederzeit auftreten. Die Integrität umfasst die Betriebssicherheit/Safety, den Schutz vor Übertragungsfehlern, und die Angriffssicherheit/Security, insbesondere den Schutz vor vorsätzlicher Veränderung.

Eine Manipulationserkennung an einem Fahrzeug, insbesondere einem Schienenfahrzeug, geschieht, indem ein digitaler Fingerabdruck eines Fahrzeugnetzwerks ermittelt wird und mit einer hinterlegten Referenzinformation verglichen wird. Ein digitaler Fingerabdruck eines Fahrzeugnetzwerks charakterisiert die aktuell vorhandene Konfiguration des Fahrzeugnetzwerks, d.h. die Anzahl verbundener Netzwerkkomponenten, wie Steuergeräte und/oder eine Menge von Identifizierungsinformation der verbundenen Netzwerkkomponenten. Die Identifizierungsinformation einer Netzwerkkomponente kann z.B. durch ihre Netzwerkadresse, wie MAC-Adresse, IP-Adresse oder durch ihren Typ und ihre Seriennummer gegeben sein. Ein digitaler Fingerabdruck eines Fahrzeugnetzwerks kann auch eine Information umfassen, welche die Netzwerk-Topologie charakterisiert, d.h. die beschreibt, welche Netzwerkkomponente direkt mit welcher oder welchen anderen Netzwerkkomponente verbunden ist, und über welche Schnittstelle. In Abhängigkeit vom Ergebnis des Vergleichs erfolgt eine Anpassung der Steuerfunktion einer mit dem betrachteten Fahrzeugnetzwerk verbundenen Steuereinheit, die insbesondere ein Steuerrechner ist.

Für den Fall einer Abweichung bei diesem Vergleich wird auf eine sogenannte Safety-Steuerung bzw. einen betriebssicheren Zustand umgeschaltet. Somit wird bei einer relevanten Manipulation an einem Fahrzeugnetzwerk durch die Manipulationserkennung und die anschließende Umschaltung auf die Safety-Steuerung verhindert, dass eine Schädigung von Personen oder eine Schädigung einer Anlage/Fahrzeugs auftreten kann. Dabei können standardmäßig vorhandene Safety-Funktionen genutzt werden, um einem relevanten Vorfall zu entgegnen oder den Schaden daraus zu begrenzen.

Eine ermittelte Vergleichsinformation wird gegen eine gespeicherte Referenzinformation geprüft, um zu ermitteln, ob die tatsächliche Netzwerkkonfiguration des Fahrzeugnetzwerkes der Referenzinformation entspricht. Somit wird eine Manipulation an einem Fahrzeugnetzwerk erkannt.

Wesentlich ist, eine Manipulation am Steuernetzwerk eines Fahrzeugs zu erkennen. Es ist z.B. erkennbar, wenn ein zusätzliches Netzwerkgerät mit einem Fahrzeugnetzwerk verbunden wird, indem die Anzahl der verbundenen Netzwerkkomponenten höher ist als der gespeicherte Referenzwert. Auch kann ein Ersetzen eines Netzwerkgerätes durch ein anderes Netzwerkgerät anhand der unterschiedlichen Identifizierungsinformation der Netzwerkkomponente erkannt werden. Auch kann ein Umstecken der Verkabelung erkannt werden.

Die Vergleichsinformation bzw. die Referenzinformation kann als digitaler Referenzfingerabdruck des Fahrzeugnetzwerkes verstanden werden.

Ein "digitaler Fingerabdrucks" ist jeweils charakteristisch für ein einzelnes Fahrzeugnetzwerk 2.

Eine Fahrzeugsteuerung führt dann eine reguläre Steuerung aus, wenn der ermittelte digitale Fingerabdruck des zur Steuerung des Fahrzeugs verwendeten Steuernetzwerks mit einem gespeicherten Referenzfingerabdruck zusammenpasst. Bei einer Abweichung wird das Fahrzeug eingeschränkt betrieben bzw. deaktiviert, um es in einem betriebssicheren Zustand zu halten.

Es ist vorteilhaft, ein Ethernet- oder IP-basiertes Fahrzeugnetzwerk zu verwenden, das nur mit bekannten Komponenten entsprechend einer festen Verkabelung verbunden ist. Dies bedeutet, dass es sich um ein geschlossenes Netzwerk mit fester Konfiguration handelt. Dies gilt für den Fall, dass an einem Fahrzeugsteuernetzwerk eine Manipulationserkennung vorgenommen wurde, soweit keine Abweichung des ermittelten Fingerabdrucks des Steuernetzwerks von einem gespeicherten Referenzfingerabdruck detektiert wird. Entsprechend der Erfindung kann bei einem Vergleich eine Abweichung von dieser festen Netzwerkkonfiguration leicht erkannt werden. Es ist vorteilhaft, bei Auftreten einer Abweichung von der hinterlegten, festen Konfiguration die Fahrzeugsteuerung anzupassen. Dadurch kann auch bei einem absichtlich oder versehentlich manipulierten Fahrzeugsteuerungsnetzwerk eine fehlerhafte Steuerung vermieden werden. Das Ziel, eine Gefährdung von Fahrgästen zu verhindern, wird dadurch erreicht.

Die Durchführung eines Vergleichs zwischen "digitalem Fingerprint" und einer Referenzinformation kann durch eine Steuereinheit, wie einen Steuerrechner im Rahmen eines Fahrzeugnetzwerkes, selbst durchgeführt werden. Genauso kann jedoch das Ergebnis des Vergleichs einer weiteren Steuereinheit zugeführt werden. Dies kann über das Steuernetzwerk selbst oder über eine separate Steuerleitung erfolgen.

Vorteilhaft ist der Einsatz einer speicherprogrammierbaren Steuereinheit. Damit kann die Ansteuerung von Klimaanlagen, Türen, Antrieben, Bremsen usw. erfolgen.

Insbesondere für einen betriebssicheren Zustand eines Fahrzeuges können Vergleichs- oder Prüfergebnisse kryptographisch bei einer Weiterleitung geschützt werden. Dies kann beispielsweise durch einen sogenannten "Message-Authentication-Code/MAC" oder durch eine "digitale Signatur" geschehen. Damit erhält diese Information einen Zustand, in dem sie nicht manipulierbar ist.

Zur Manipulationserkennung kann in vorteilhafter Weise die Prüfung der topologischen Integrität der Netzwerkverkabelung herangezogen werden. Unter topologischer Integrität wird verstanden, dass die Verbindung der Netzwerkschnittstellen der mit dem Fahrzeugsteuernetzwerk verbundenen Netzwerkkomponenten durch Netzwerkkabel unverändert ist. Auch wenn eine Datenkommunikation möglich ist, so kann bei falsch verbundenen Netzwerkkabeln z.B. eine Netzwerküberlastung auf manchen Netzwerkverbindungen nicht ausgeschlossen werden, oder es kann echtzeitkritische Netzwerksteuerkommunikation auf einer Netzwerkverbindung auf einem Netzwerkkabel durch eine weitere Datenkommunikation gestört werden, die bei wie vorgesehen verbundenen Netzwerkkabeln nicht vorhanden wäre. Dabei wird geprüft, ob die Geräte wie üblich verdrahtet sind oder ob Komponenten bzw. Netzwerkkabel beispielsweise umgesteckt wurden. Weiterhin kann geprüft werden, ob reguläre Geräte erreichbar sind und bestimmte, nicht erwartete Geräte auch tatsächlich nicht erreichbar sind. Es kann geprüft werden, ob unbelegte Netzwerkanschlüsse tatsächlich unbelegt sind. Dabei kann berücksichtigt werden, dass einzelne Steuergeräte vom einem Fahrzeugservice ausgeschaltet werden können. Somit kann das Fehlen einer Komponente bei der Suche nach Manipulationen sofort als negativ, d.h. als unzulässige Abweichung, eingestuft werden.

Weiterhin ist es vorteilhaft, physikalische Sensoren zur Überwachung der Netzwerkverkabelung einzusetzen. So können beispielsweise Bauteile, die digital, also nur offen oder nur geschlossen, gesteuert werden, überwacht werden.

In einer weiteren Variante werden physikalische Übertragungsparameter zur Auswertung herangezogen. Dabei wird eine Impulsantwort der Netzwerkverkabelung ermittelt und mit einem Referenzwert verglichen. Eine Manipulation in Form eines Austauschs eines Netzwerkkabels oder in Form einer physikalischen Manipulation an einem Netzwerkkabel sind somit erkennbar.

Es ist weiterhin vorteilhaft, anhand von IP-Adressen oder MAC-Adressen Fremdgeräte oder Austauschgeräte zu identifizieren. Die am Fahrzeugnetzwerk angeschlossenen Komponenten werden identifiziert bzw. authentisiert. Dabei wird deren Gerätetyp nach Kriterien wie Hersteller, Modell, Seriennummer usw. ermittelt. Darüber hinaus kann eine kryptographische Geräteauthentisierung erfolgen. Dabei wird die Authentisierung angeschlossener Geräte mittels eines Passwortes, eines kryptographischen Schlüssels oder eines digitalen Gerätezertifikats durchgeführt. Diese Abfrage kann im Rahmen der Manipulationserkennung selbst vorgenommen werden oder eine bei der Authentisierung einer weiteren Komponente auftretende Kommunikation wird durch die Manipulationserkennung überwacht und analysiert. Weiterhin können Testdaten über das Fahrzeugnetzwerk übertragen werden, um deren korrekte Übertragung zu verifizieren.

Mittels einer Steuereinheit wird mindestens eine Steuerungsaufgabe in Abhängigkeit vom Ergebnis der Prüfung des Steuerungsnetzwerkes durchgeführt. Dabei wird die Funktionalität eines Steuergerätes für den Betrieb freigegeben, eingeschränkt freigegeben oder deaktiviert. Unter Deaktivierung ist in der Regel ein eigensicherer Betriebszustand eines Fahrzeugs zu verstehen. Als besonderer Service kann eine Freigabemeldung an ein Steuergerät gesandt werden. Dadurch wird erreicht, dass die Anlage auch bei einer vorliegenden Manipulation des Steuernetzwerkes nicht in einen nichtbetriebssicheren Betriebszustand wechselt. Es kann ein eingeschränkter Betrieb des Fahrzeuges erfolgen, wie mit begrenzter Fahrgeschwindigkeit oder Fahren auf Sicht.

Zusätzliche Vorteile ergeben sich aus dem Einsatz eines Steuerrechners bei der Kopplung von mehreren Fahrzeugnetzwerken, um die zulässige Kommunikation auf einem Netzkoppler/Gateway zu beschränken. In der Regel sind unterschiedliche Fahrzeugteilnetzwerke, wie ein Passagiernetz, eine Betreibernetz oder ähnliches, vorhanden, welche normalerweise vollständig abgekoppelt sind von einem Fahrzeugnetzwerk, welches für die Steuerung des Fahrzeugs zuständig ist. Im Ablauf des Verfahrens zur Manipulationserkennungen können Berechnungen eingebaut werden, bei denen zum Fortsetzen des Betriebes des Fahrzeugs zusätzliche Kriterien erfüllt sein müssen. So kann z.B. geprüft werden, dass ein Netzkoppler/Gateway mit einer Firewall-Funktionalität tatsächlich eine unzulässige Kommunikation zwischen einem Fahrzeugsteuernetzwerk und einem über den Netzkoppler/Gateway verbundenen Betreibernetzwerk oder Passagiernetzwerk wirklich unterbindet. Falls dennoch eine solche unzulässige Kommunikation möglich ist, z.B. weil die Netzwerkkabel zum Netzkoppler/Gateway falsch gesteckt sind oder weil die Firewall-Funktionalität des Netzkopplers/Gateways nicht ordnungsgemäß funktioniert, so wird ein Fehler detektiert, d.h. die Manipulationserkennung erkennt eine Abweichung/Manipulation.

Zur Nachverfolgung von Fehlermeldungen kann ein Eintrag in einen Fehlerspeicher geschehen. Dies gilt ebenso für positive Ergebnisse einer Prüfung.

Es ergeben sich weiterhin Vorteile, falls eine Übertragung von Daten an eine landseitige Einheit übertragen wird, beispielsweise über "WLAN" oder ein Mobilfunknetz, wie beispielsweise "GSM", "GPRS", "UMTS", "WIMAX", oder ähnliches.

Das Verfahren zur Manipulationserkennung kann zu unterschiedlichen Zeiten angewandt werden, es kann regelmäßig, ständig oder optional abgerufen werden. Das Verfahren kann beispielsweise bei folgenden Bedingungen aktiviert werden:
- Bei Beendigung eines Wartungsmodus für die Freigabe zum Betrieb,
- bei der Aktivierung der Steuerungsfunktion,
- bei Anfahren des Fahrzeugs,
- beim Wechsel des Bedieners zur Authentisierung des neuen Bedieners,
- im laufenden Betrieb.

Ein Fahrzeug, insbesondere ein Schienenfahrzeug, kann über Fahrzeugnetze bzw. -netzwerke verfügen, beispielsweise um unterschiedliche Fahrzeugnetzwerkaufgaben bzw. Fahrzeugsteuerungsaufgaben auszuführen. Hier sind zu nennen:
- das Antriebsnetzwerk,
- das Bremsnetzwerk,
- das Zugsicherungsnetzwerk,
- das Klimasteuerungsnetzwerk,
- das Türsteuerungsnetzwerk,
- das Passagierinformationsnetzwerk oder
- das Videoüberwachungsnetzwerk.

Die Überwachung kann ein einzelnes dieser Fahrzeugnetzwerke betreffen. Es ist auch möglich, mehrere Fahrzeugnetzwerkaufgaben auf einem Fahrzeugnetz zu realisieren. So kann z.B. ein Antriebsnetzwerk und ein Bremsnetzwerk zusammenfallen. Die einzelnen Fahrzeugnetze können über Netzkoppler/Gateways verbunden sein.

In einer weiteren Variante wird die Integrität eines Fahrzeugnetzes überwacht und bei einer Abweichung wird eine Datenkommunikation mit einem Fahrzeugnetzwerk unterbunden oder eingeschränkt. Falls beispielsweise erkannt wird, dass ein Betreibernetzwerk oder ein Steuernetzwerk für beispielsweise eine Klimasteuerung oder eine Beleuchtungssteuerung von der bekannten Referenzkonfiguration abweicht, da ein Zusatzgerät oder ein Wartungsgerät mit diesem Fahrzeugnetzwerk verbunden ist, so kann ein Netzkoppler/Gateway als Ersatz mit einem weiteren Teilnetz, z.B. dem Steuernetzwerk oder dem Bremsnetzwerk des Fahrzeugs verbunden werden. Darüber hinaus kann eine Datenkommunikation des betrachteten Fahrzeugnetzwerkes mit weiteren Netzwerken eingeschränkt oder unterbunden werden. So wird verhindert, dass sich Änderungen irgendeines Fahrzeugnetzwerkes auf den zuverlässigen Betrieb eines weiteren Fahrzeugnetzwerkes gefährdend auswirken.

Es ist besonders vorteilhaft, dass eine Referenzinformation nicht nur fest vorgegeben sein kann, sondern in einer Variante auch angelernt werden kann. Bei einer Wartung des Fahrzeugs, bei der ein defektes Steuergerät getauscht wird, ändert sich auch der Fingerprint des Fahrzeugnetzwerks. Um den Referenzfingerprint nicht explizit durch Bedienpersonal speichern zu müssen, kann beim Beenden der Wartung bzw. bei einem Beenden eines Fahrzeug-Wartungsmodus der aktuell vorhandene Fingerabdruck des Fahrzeugnetzwerks ermittelt werden und als neuer Referenzfingerprint gespeichert werden. Dies kann durch ein Steuergerät des Fahrzeugs erfolgen oder durch ein verbundenes Wartungsgerät, beispielsweise ein Wartungsnotebook. Dabei kann der ermittelte Fingerabdruck auch modifiziert werden und der modifizierte Fingerabdruck als Referenzfingerabdruck abgespeichert werden, um z.B. die das verbundene Wartungsnotebook betreffende Information aus dem Referenzfingerabdruck zu entfernen. Bei einer Wartung von Fahrzeugen oder Schienenfahrzeugen kann damit die erfasst und gespeichert werden, wenn das Fahrzeug Referenzinformation für den Fahrbetrieb freigegeben wird. Das ist in diesem Fall nur möglich, wenn über eine Wartungsschnittstelle des Schienenfahrzeuges ein berechtigter Wartungszugriff erfolgt.

Im Folgenden werden anhand von schematischen Figuren die Erfindung nicht einschränkende Ausführungsbeispiele beschrieben:
- Figur 1: zeigt ein Schienenfahrzeug mit mehreren unter-schiedlichen Fahrzeugnetzwerken 2, wobei ein Netz-koppler/Gateway GW die Fahrzeugnetzwerke 2 mit einem Fahrzeughauptnetzwerk 3 verbindet,
- Figur 2: zeigt eine Variante von Figur 1, wobei das Schienenfahrzeug über mehrere Fahrzeugnetzwerke 2 verfügt, die über einen Netzkoppler/Gateway GW untereinander verbunden sind, sowie gleichzeitig über den Netzkoppler/Gateway GW mit dem Fahrzeughauptnetzwerk 3 gekoppelt sind,
- Figur 3: zeigt einen Ablaufplan für die Manipulationserkennung und entsprechende Reaktionen.

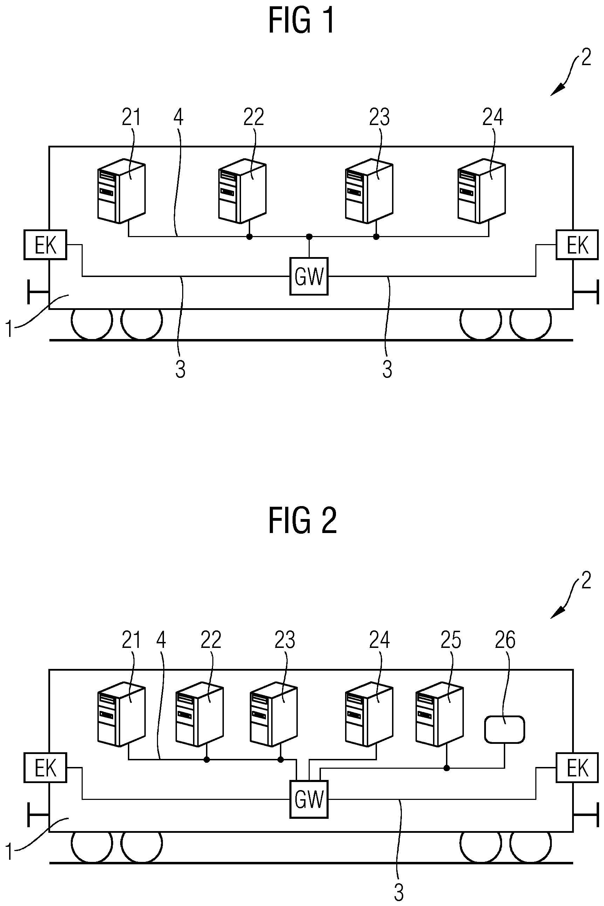

Die Figuren 1 und 2 zeigten jeweils ein Fahrzeug 1, insbesondere ein Schienenfahrzeug, mit einem Fahrzeughauptnetzwerkbus 3, das eine oder mehrere elektrische Kopplungen EK über einen Netzkoppler/Gateway GW verbindet. Die Fahrzeugteilnetzwerke 21 bis 26 des Fahrzeugnetzwerks 2 sind wie in Figur 1 dargestellt, untereinander über einen Fahrzeugsteuernetzwerkbus 4 verbunden, wobei eine Verbindung zum Netzkoppler/Gateway GW existiert. Das Fahrzeugnetzwerk 2 kann insbesondere als Ethernet-Netzwerk bzw. als IP-Netzwerk oder als Kombination davon realisiert sein. Es ist in Fig. 1 als Bus dargestellt, über den die Fahrzeugsteuergeräte bzw. Fahrzeugteilnetzwerke 21-24 und der Netzkoppler/Gateway GW verbunden sind. Das Fahrzeugnetzwerk 2 bzw. eine Gruppe davon, kann ebenso als Ring oder als Stern ausgebildet sein.

Die Figur 2 zeigt eine Variante, bei der drei Fahrzeugsteuernetzwerke bzw. drei Fahrzeugsteuerteilnetze 21-23, sowie 25-26 jeweils zusammengefasst sind. Die Fahrzeugsteuerteilnetzwerke entsprechend Figur 2 sind somit teilweise untereinander und teilweise über den Netzkoppler/Gateway GW miteinander verbunden und einzeln und insgesamt über den Netzkoppler/ Gateway GW mit dem Fahrzeughauptnetzwerkbus 3.

Die Bezugszeichen der Figuren bedeuten im Einzelnen:
- 1: Fahrzeug
- 2: Fahrzeugnetzwerke / VCS Fahrzeugsteuernetzwerk
- 3: Fahrzeughauptnetzwerkbus
- 4: Fahrzeugteilnetzwerkbus / Fahrzeugsteuernetzwerkbus

Fahrzeugteilnetzwerke:
- 21: Steuernetzwerk
- 22: Bremsnetzwerk / Bremssteuergerät
- 23: Klimanetzwerk / Klimasteuergerät / HVAC-Steuerung
- 24: Zugsicherungsnetzwerk ATP
- 25: Fahrgastinformationsnetzwerk PIS-S
- 26: Fahrgastinformationsnetzwerk AIS-D

Figur 3:
- 31: Start
- 32: Ermittlung des Fingerabdrucks eines Fahrzeugnetzwerks
- 33: Vergleich mit Referenzinformation
- 34: Entscheidung: Manipulation Ja/Nein
- 35: Nein
- 36: Ja
- 37: Aktivierung eines regulären Steuerungsmodus
- 38: Aktivierung eines betriebssicheren Steuerungsmodus
- 39: Ende

- GW: Netzkoppler/Gateway
- EK: elektrische Kopplung.

Das in Figur 1 abgebildete Schienenfahrzeug enthält mehrere Fahrzeugsteuergeräte, die untereinander zusammengeschaltet sind. Das Fahrzeugsteuergerät des Steuernetzwerks 21 übernimmt in diesem Fall als "Vehicle Control Server (VCS)" eine Leitrolle und kann einzelne Untersysteme/Fahrzeugteilnetze/Fahrzeugsteuergeräte 22 - 24 ansteuern. Zu den Untersystemen gehören in diesem Fall:
• das Bremssteuergerät bzw. das Bremsnetzwerk 22,
• das Klimasteuergerät bzw. das Klimanetzwerk 23, HVAC, Heating, Ventilation, Air Condition, und
• das Zugsicherungssteuergerät bzw. das Zugsicherungsnetzwerk 24 , Automatic Train Protection, ATP.

Das Steuernetzwerk 21 des Fahrzeugs 1 wird über den Netzkoppler GW mit dem Fahrzeughauptnetzwerkbus 3 verbunden. Dieser Fahrzeughauptnetzwerkbus 3 kann ein Ethernet-Netzwerk oder ein IP-Netzwerk sein oder eine Kombination davon. Ein existierendes Hauptnetzwerk eines Zuges ist beispielsweise das "Ethernet Train Backbone", ETB/Ethernet/Zugbasisnetz.

Im Fall der Manipulationserkennung am Fahrzeugsteuernetzwerk 2 wird bei erkannter Manipulation die Fahrzeugsteuerung angepasst, d.h. die realisierte Steuerfunktionalität. Die Manipulationserkennung kann im Netzkoppler/Gateway GW oder als Teil des "Vehicle Control Server VCS", d.h. des Fahrzeugsteuernetzwerks oder -gerätes 21 realisiert sein. In einer Variante ist sie Teil des Zugsicherungssteuergeräts 24/"Automatic Train Protection" ATP.

Entsprechend einem weiteren Ausführungsbeispiel kann das Ergebnis der Manipulationserkennung an ein anderes Fahrzeug über den Fahrzeughauptnetzwerkbus 3 und eine elektrische Kopplung EK übertragen werden. Dabei besteht die Möglichkeit, das Ergebnis der Manipulationserkennung an einem Bedienpult anzuzeigen.

Figur 2 stellt eine Variante dar, in der die Ausstattung des Schienenfahrzeugs eine größere Zahl von Fahrzeugteilnetzwerken 21 - 26 aufweist. Diese sind über den Netzkoppler/Gateway GW verbunden.

In Figur 2 sind dies: ein Steuernetzwerk 21, welches ein Fahrzeugsteuergerät als Vehicle Control Server (VCS) sowie ein Bremssteuergerät 22 und ein Klimasteuergerät mit einem Klimasteuernetzwerk 23 umfasst. Weiterhin sind ein Zugsicherungsnetzwerk mit einem Zugsicherungssteuergerät 24 sowie ein Fahrgastinformationssteuernetz mit zwei Fahrgastinformationssteuergeräten 25 PIS-S und 26 PIS-D vorhanden.

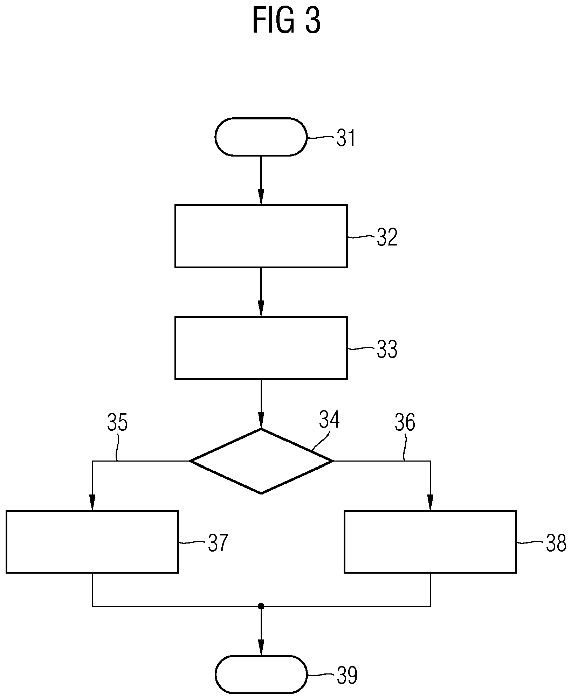

Figur 3 zeigt das Ablaufschema für eine Manipulationserkennung. Nach dem Start 31 wird die Ermittlung 32 eines sog. digitalen Fingerabdrucks für ein aktuelles Netzwerk betrieben. Als nächstes wird das Ergebnis mit einer gespeicherten Referenzinformation verglichen 33. Ergibt die Manipulationserkennung 34, dass keine Abweichung in diesem Test vorliegt, also der linke Zweig mit der Antwort Nein 35 zutrifft, so wird die Aktivierung 37 eines regulären Steuerungsmodus betrieben. Liegt eine Abweichung zwischen einer Referenzinformation und einem ermittelten Fingerabdruck eines Fahrzeugnetzwerks vor, so wird der rechte Zweig mit einem Ja 36 beschritten und es erfolgt die Aktivierung 38 eines betriebssicheren Steuerungsmodus. Im Anschluss daran ist diese eine Verfahrensweise zur Manipulationserkennung am Ende 39 angelangt.

## Patentansprüche

1. Verfahren zur Manipulationserkennung an mindestens einem Fahrzeugnetzwerk (2) eines Fahrzeugs (1), aufweisend folgende Schritte:
- Ermittlung eines digitalen Fingerabdrucks des mindestens einen Fahrzeugnetzwerkes (2),
- Vergleich des digitalen Fingerabdrucks des mindestens einen Fahrzeugnetzwerkes (2) mit Referenzinformation zur Feststellung einer Manipulation,
- Anpassung der Funktion des mindestens einen Fahrzeugnetzwerkes (2) in Abhängigkeit vom Ergebnis des Vergleichs, derart, dass die Betriebssicherheit/Safety gewährleistet ist,
- Aktivierung (37) eines regulären Steuerungsmodus, falls keine Manipulation an dem mindestens einen Fahrzeugnetzwerk (2) erkannt ist oder Aktivierung (38) eines betriebssicheren Steuerungsmodus, falls eine Manipulation an dem mindestens einen Fahrzeugnetzwerk (2) erkannt ist.

2. Verfahren nach Anspruch 1, **dadurch gekennzeichnet, dass** die Anpassung des mindestens einen Fahrzeugnetzwerkes (2) mittels einer Steuereinheit ausgeführt wird.

3. Verfahren nach einem der vorhergehenden Ansprüche, **dadurch gekennzeichnet, dass** in dem betriebssicheren Modus hinterlegte Safety-Funktionen genutzt werden.

4. Verfahren nach einem der vorhergehenden Ansprüche, **dadurch gekennzeichnet, dass** zur Erkennung einer Manipulation an dem mindestens einen Fahrzeugnetzwerk (2) das Ergebnis des Vergleiches der Referenzinformation mit dem digitalen Fingerabdruck des Fahrzeugnetzwerkes verwendet wird.

5. Verfahren nach Anspruch 4, **dadurch gekennzeichnet, dass** ein regulärer Steuermodus in einem Fahrzeugsteuernetzwerk (21) nur dann ausgeführt wird, wenn der ermittelte digitale Fingerabdruck des zur Steuerung des Fahrzeugs (1) verwendeten Fahrzeugsteuernetzwerkes (21) zu einer gespeicherten Referenzinformation passt.

6. Verfahren nach Anspruch 4, **dadurch gekennzeichnet, dass** bei einer Abweichung zwischen dem aufgenommenen digitalen Fingerabdruck und einer Referenzinformation das mindestens eine Fahrzeugnetzwerk (2) in einem eingeschränkten Modus betrieben oder deaktiviert wird, um das Fahrzeug in einem betriebssicheren Zustand zu halten.

7. Verfahren nach einem der vorhergehenden Ansprüche, **dadurch gekennzeichnet, dass** ein Fahrzeugsteuernetzwerk (21) ein Ethernet oder ein IP-basiertes Fahrzeugsteuernetzwerk oder eine Kombination daraus ist.

8. Verfahren nach einem der vorhergehenden Ansprüche, **dadurch gekennzeichnet, dass** ein geschlossenes Fahrzeugnetzwerk (2) mit fester Netzwerkkonfiguration verwendet wird, so dass eine Abweichung von dieser festen Netzwerkkonfiguration einfach erkennbar ist.

9. Verfahren nach Anspruch 8, **dadurch gekennzeichnet, dass** bei einer Abweichung beim Vergleich zwischen einer festen Referenznetzwerkkonfigurationsinformation und dem digitalen Fingerabdruck eines zu prüfenden mindestens einen Fahrzeugnetzwerkes (2) die Steuerung des mindestens einen Fahrzeugnetzwerkes (2) angepasst wird.

10. Verfahren nach einem der vorhergehenden Ansprüche, **dadurch gekennzeichnet, dass** für den Fall, dass eine Manipulation oder Vandalismus an einem Steuernetzwerk eines Fahrzeugs erkannt werden, wodurch eine korrekte Durchführung der Funktionalität einer Steuerung gefährdet ist, kein regulärer Betrieb des Fahrzeugs (1) aufgenommen wird.

11. Verfahren nach einem der vorhergehenden Ansprüche, **dadurch gekennzeichnet, dass** eine topologische Integrität der Netzwerkverkabelung geprüft wird.

12. Verfahren nach einem der vorhergehenden Ansprüche, **dadurch gekennzeichnet, dass** physikalische Sensoren eingesetzt werden und bipolare Zustände von Schaltelementen abgefragt werden.

13. Verfahren nach einem der vorhergehenden Ansprüche, **dadurch gekennzeichnet, dass** physikalische Übertragungsparameter ausgewertet und mit Referenzwerten verglichen werden.

14. Verfahren nach einem der vorhergehenden Ansprüche, **dadurch gekennzeichnet, dass** im Fahrzeugnetzwerk vorhandene Fremdgeräte erkannt werden.

15. Verfahren nach Anspruch 14, wobei die Kennung eines Gerätes mittels eines kryptographischen Schlüssels geschützt ist.

16. Verfahren nach einem der vorhergehenden Ansprüche, **dadurch gekennzeichnet, dass** eine Referenzinformation anlernbar ist.

17. Verfahren nach einem der vorhergehenden Ansprüche, **dadurch gekennzeichnet, dass** eine Manipulationserkennung ständig oder zu ausgewählten Zeitpunkten oder bei ausgewählten Ereignissen oder bei ausgewählten Betriebszuständen erfolgt.

18. Verfahren nach einem der vorausgehenden Ansprüche, **dadurch gekennzeichnet, dass** eine Überwachung an einzelnen Fahrzeugteilnetzwerken (21 bis 26) geschieht.

19. Steuereinheit zur Manipulationserkennung an mindestens einem Fahrzeugnetzwerk (2) eines Fahrzeugs (1), **dadurch gekennzeichnet, dass** eine Durchführung von Steueraufgaben in Abhängigkeit vom Ergebnis eines Vergleichs eines zuvor ermittelten digitalen Fingerabdrucks eines mindestens einen Fahrzeugnetzwerkes (2) mit Referenzinformationen eines Steuernetzwerkes (21) derart geschieht, dass die Betriebssicherheit/Safety gewährleistet ist, wobei ein regulären Steuerungsmodus aktiviert wird, falls keine Manipulation an dem mindestens einen Fahrzeugnetzwerk (2) erkannt ist oder ein betriebssicheren Steuerungsmodus aktiviert wird, falls eine Manipulation an dem mindestens einen Fahrzeugnetzwerk (2) erkannt ist.

20. Steuereinheit nach Anspruch 19, **dadurch gekennzeichnet, dass** die Steuereinheit derart ausgelegt ist, dass eine Selbstprüfung durchführbar ist.

21. Steuereinheit nach einem der Ansprüche 19 bis 20, **dadurch gekennzeichnet, dass** durch die Steuereinheit mindestens ein Steuergerät für den regulären Betrieb freigegeben, eingeschränkt freigegeben oder deaktiviert werden kann.

22. Steuereinheit nach einem der Ansprüche 19 bis 21, **dadurch gekennzeichnet, dass** die Steuereinheit einen Steuerrechner umfasst, der eine zulässige Kommunikation über einen Netzkoppler/Gateway (GW), zur Kopplung von mehreren Fahrzeugnetzwerken (2) beschränkt.

23. Steuereinheit nach einem der Ansprüche 19 bis 22, **dadurch gekennzeichnet, dass** eine Alarmmeldung, die eine Manipulationserkennung angezeigt, abstellbar ist und ein regulärer Betrieb aufgenommen werden kann.

24. Steuereinheit nach einem der Ansprüche 19 bis 23, **dadurch gekennzeichnet, dass** eine Fehlerspeicher zur Speicherung von Prüfergebnissen vorhanden ist.

25. Steuereinheit nach einem der Ansprüche 19 bis 24, **dadurch gekennzeichnet, dass** eine Datenkommunikation zur Manipulationserkennung an eine landseitige Einheit über ein standardmäßiges Mobilfunknetz übertragbar ist.

26. Steuereinheit nach einem der Ansprüche 19 bis 25, **dadurch gekennzeichnet, dass** mehrere Fahrzeugnetzwerke (2) bzw. Fahrzeugteilnetzwerke (21 bis 26) vorhanden sind, die über einen Netzkoppler/Gateway (GW) verbunden sind.

## Claims

1. Method for the recognition of manipulation on at least one vehicle network (2) in a vehicle (1), having the following steps:
- a digital fingerprint from the at least one vehicle network (2) is ascertained,
- the digital fingerprint from the at least one vehicle network (2) is compared with reference information in order to determine a manipulation,
- the function of the at least one vehicle network (2) is customized on the basis of the result of the comparison, such that the safety is ensured,
- a regular control mode is activated (37) if no manipulation is recognized on the at least one vehicle network (2) or a safe control mode is activated (38) if a manipulation is recognized on the at least one vehicle network (2).

2. Method according to Claim 1, **characterized in that** the customization of the at least one vehicle network (2) is executed by means of a control unit.

3. Method according to either of the preceding claims, **characterized in that**, in the safe mode, stored safety functions are used.

4. Method according to one of the preceding claims, **characterized in that** a manipulation is recognized on the at least one vehicle network (2) by using the result of the comparison of the reference information with the digital fingerprint from the vehicle network.

5. Method according to Claim 4, **characterized in that** a regular control mode is executed in a vehicle control network (21) only if the ascertained digital fingerprint from the vehicle control network (21) that is used for controlling the vehicle (1) matches a stored piece of reference information.

6. Method according to Claim 4, **characterized in that** a discrepancy between the recorded digital fingerprint and a piece of reference information prompts the at least one vehicle network (2) to be operated in a restricted mode or deactivated in order to keep the vehicle in a safe state.

7. Method according to one of the preceding claims, **characterized in that** a vehicle control network (21) is an Ethernet or an IP-based vehicle control network or a combination thereof.

8. Method according to one of the preceding claims, **characterized in that** a self-contained vehicle network (2) with a fixed network configuration is used, as a result of which a discrepancy from this fixed network configuration is easy to recognize.

9. Method according to Claim 8, **characterized in that** a discrepancy in the case of the comparison between a fixed piece of reference network configuration information and the digital fingerprint from at least one vehicle network (2) to be checked prompts customization of the control of the at least one vehicle network (2).

10. Method according to one of the preceding claims, **characterized in that** if a manipulation or vandalism is recognized on a control network in a vehicle that means that correct performance of the functionality of a control is threatened, regular operation of the vehicle (1) is not commenced.

11. Method according to one of the preceding claims, **characterized in that** a topological integrity for the network cabling is checked.

12. Method according to one of the preceding claims, **characterized in that** physical sensors are used and bipolar states of switching elements are checked.

13. Method according to one of the preceding claims, **characterized in that** physical transmission parameters are evaluated and are compared with reference values.

14. Method according to one of the preceding claims, **characterized in that** extraneous devices that are present in the vehicle network are recognized.

15. The method according to Claim 14, wherein the identifier of a device is protected by means of a cryptographic key.

16. Method according to one of the preceding claims, **characterized in that** a piece of reference information can be taught.

17. Method according to one of the preceding claims, **characterized in that** manipulation recognition takes place constantly or at selected times or for selected events or for selected operating states.

18. Method according to one of the preceding claims, **characterized in that** monitoring occurs on individual vehicle subnetworks (21 to 26).

19. Control unit for recognizing manipulation on at least one vehicle network (2) in a vehicle (1), **characterized in that** control tasks are performed on the basis of the result of a comparison of a previously ascertained digital fingerprint from at least one vehicle network (2) with reference information from a control network (21), such that the safety is ensured, wherein a regular control mode is activated if no manipulation is recognized on the at least one vehicle network (2) or a safe control mode is activated if a manipulation is recognized on the at least one vehicle network (2).

20. Control unit according to Claim 19, **characterized in that** the control unit is designed such that a self-check can be performed.

21. Control unit according to one of Claims 19 to 20, **characterized in that** the control unit can enable, restrictedly enable or deactivate at least one controller for the regular operation.

22. Control unit according to one of Claims 19 to 21, **characterized in that** the control unit comprises a control computer that limits admissible communication via a network coupler/gateway (GW) in order to couple a plurality of vehicle networks (2).

23. Control unit according to one of Claims 19 to 22, **characterized in that** an alarm message that indicates recognition of a manipulation can be switched off and regular operation can be commenced.

24. Control unit according to one of Claims 19 to 23, **characterized in that** an error memory is present in order to store check results.

25. Control unit according to one of Claims 19 to 24, **characterized in that** data communication for the recognition of manipulation can be transmitted to a land-based unit via a standard mobile radio network.

26. Control unit according to one of Claims 19 to 25, **characterized in that** a plurality of vehicle networks (2) or vehicle subnetworks (21 to 26) are present that are connected via a network coupler/gateway (GW).

## Revendications

1. Procédé de reconnaissance de manipulation sur au moins un réseau de véhicule (2) d'un véhicule (1), comprenant les étapes suivantes :
- détermination d'une empreinte digitale numérique de l'au moins un réseau de véhicule (2),
- comparaison de l'empreinte digitale numérique de l'au moins un réseau de véhicule (2) avec une information de référence pour constater une manipulation,
- adaptation du fonctionnement de l'au moins un réseau de véhicule (2) en fonction du résultat de la comparaison de façon à garantir la sûreté/sécurité d'exploitation,
- activation (37) d'un mode de commande normale dans le cas où aucune manipulation sur l'au moins un réseau de véhicule (2) n'est reconnue, ou activation (38) d'un mode de commande d'exploitation sûre dans le cas où une manipulation sur l'au moins un réseau de véhicule (2) a été reconnue.

2. Procédé selon la revendication 1, **caractérisé en ce que** l'adaptation de l'au moins un réseau de véhicule (2) est exécutée au moyen d'une unité de commande.

3. Procédé selon l'une des revendications précédentes, **caractérisé en ce que** des fonctions de sécurité enregistrées dans le mode d'exploitation sûre sont utilisées.

4. Procédé selon l'une des revendications précédentes, **caractérisé en ce que**, pour reconnaître une manipulation sur l'au moins un réseau de véhicule (2), le résultat de la comparaison de l'information de référence avec l'empreinte digitale numérique du réseau de véhicule est utilisé.

5. Procédé selon la revendication 4, **caractérisé en ce qu'**un mode de commande normale n'est exécuté dans un réseau de commande de véhicule (21) que si l'empreinte digitale numérique déterminée du réseau de commande de véhicule (21) utilisé pour commander le véhicule (1) correspond à une information de référence mise en mémoire.

6. Procédé selon la revendication 4, **caractérisé en ce que**, en cas d'écart entre l'empreinte digitale numérique saisie et une information de référence, l'au moins un réseau de véhicule (2) est exploité dans un mode restreint ou est désactivé pour maintenir le véhicule dans un état d'exploitation sûre.

7. Procédé selon l'une des revendications précédentes, **caractérisé en ce qu'**un réseau de commande de véhicule (21) est un réseau Ethernet ou un réseau de commande de véhicule basé sur IP ou une combinaison des deux.

8. Procédé selon l'une des revendications précédentes, **caractérisé en ce qu'**un réseau de véhicule fermé (2) à configuration de réseau fixe est utilisé, de façon qu'un écart par rapport à cette configuration de réseau fixe soit simple à reconnaître.

9. Procédé selon la revendication 8, **caractérisé en ce que**, en cas d'écart lors de la comparaison entre une information de configuration de réseau de référence fixe et l'empreinte digitale numérique d'un au moins un réseau de véhicule (2) à contrôler, la commande de l'au moins un réseau de véhicule (2) est adaptée.

10. Procédé selon l'une des revendications précédentes, **caractérisé en ce que**, dans le cas où une manipulation ou un acte de vandalisme sur un réseau de commande d'un véhicule est reconnu(e), risquant de compromettre une exécution correcte de la fonctionnalité d'une commande, il n'est pas procédé à une exploitation normale du véhicule (1).

11. Procédé selon l'une des revendications précédentes, **caractérisé en ce qu'**il est procédé à une vérification de l'intégrité topologique du câblage du réseau.

12. Procédé selon l'une des revendications précédentes, **caractérisé en ce que** des capteurs physiques sont utilisés et les états bipolaires d'éléments de commutation sont examinés.

13. Procédé selon l'une des revendications précédentes, **caractérisé en ce que** des paramètres de transmission physiques sont analysés et comparés à des valeurs de référence.

14. Procédé selon l'une des revendications précédentes, **caractérisé en ce que** des appareils étrangers présents dans le réseau de véhicule sont reconnus.

15. Procédé selon la revendication 14, l'identification d'un appareil étant protégée au moyen d'une clé cryptographique.

16. Procédé selon l'une des revendications précédentes, **caractérisé en ce qu'**une information de référence peut être apprise.

17. Procédé selon l'une des revendications précédentes, **caractérisé en ce qu'**une reconnaissance de manipulation est effectuée de manière permanente, ou à des intervalles de temps choisis, ou lors d'événements sélectionnés ou dans le cas d'états d'exploitation sélectionnés.

18. Procédé selon l'une des revendications précédentes, **caractérisé en ce qu'**une surveillance est effectuée sur des sous-réseaux de véhicule individuels (21 à 26).

19. Unité de commande pour la reconnaissance de manipulation sur au moins un réseau de véhicule (2) d'un véhicule (1), **caractérisée en ce que** des tâches de commande sont exécutées en fonction du résultat d'une comparaison d'une empreinte digitale numérique d'un au moins un réseau de véhicule (2) préalablement déterminée avec des informations de référence d'un réseau de commande (21), de façon à garantir la sûreté/sécurité d'exploitation, un mode de commande normale étant activé dans le cas où aucune manipulation sur l'au moins un réseau de véhicule (2) n'est reconnue, ou un mode de commande d'exploitation sûre est activé dans le cas où une manipulation sur l'au moins un réseau de véhicule (2) est reconnue.

20. Unité de commande selon la revendication 19, **caractérisée en ce que** l'unité de commande est conçue de manière à permettre l'exécution d'un contrôle automatique.

21. Unité de commande selon l'une des revendications 19 à 20, **caractérisée en ce que** l'unité de commande peut autoriser, autoriser de manière restreinte ou désactiver au moins un appareil de commande pour l'exploitation normale.

22. Unité de commande selon l'une des revendications 19 à 21, **caractérisée en ce que** l'unité de commande comprend un ordinateur de commande qui limite une communication autorisée par le biais d'un coupleur/d'une passerelle (GW) de réseau pour le couplage de plusieurs réseaux de véhicule (2).

23. Unité de commande selon l'une des revendications 19 à 22, **caractérisée en ce qu'**un message d'alarme indiquant une reconnaissance de manipulation peut être arrêté et il peut être procédé à une exploitation normale.

24. Unité de commande selon l'une des revendications 19 à 23, **caractérisée par** la présence d'une mémoire d'erreurs pour l'enregistrement de résultats de contrôle.

25. Unité de commande selon l'une des revendications 19 à 24, **caractérisée en ce qu'**une communication de données relative à la reconnaissance de manipulation peut être transmise à une unité de terrain par le biais d'un réseau de téléphonie mobile standard.

26. Unité de commande selon l'une des revendications 19 à 25, **caractérisé en ce qu'**il existe plusieurs réseaux de véhicule (2) respectivement sous-réseaux de véhicule (21 à 26) qui sont reliés par un coupleur/une passerelle (GW) de réseau.
